**Europäisches Patentamt**

**European Patent Office**

**Office européen des brevets**

(19)

(11) Veröffentlichungsnummer : **0 065 004
B1**

(12) **EUROPÄISCHE PATENTSCHRIFT**

(45) Veröffentlichungstag der Patentschrift :
**13.03.85**

(21) Anmeldenummer : **81903246.7**

(22) Anmeldetag : **20.11.81**

(86) Internationale Anmeldenummer :
**PCT/DE 81/00204**

(87) Internationale Veröffentlichungsnummer :
**WO/8201778 (27.05.82 Gazette 82/14)**

(51) Int. Cl.⁴ : **G 06 K 19/08**, G 06 K 5/00,
G 06 K 7/10

(54) **VERFAHREN UND VORRICHTUNG ZUR KENNZEICHNUNG UND/ODER IDENTIFIZIERUNG EINES DATENTRÄGERS.**

(30) Priorität : **21.11.80 DE 3043985**

(43) Veröffentlichungstag der Anmeldung :
**24.11.82 Patentblatt 82/47**

(45) Bekanntmachung des Hinweises auf die Patenterteilung : **13.03.85 Patentblatt 85/11**

(84) Benannte Vertragsstaaten :
**AT CH FR GB LI NL**

(56) Entgegenhaltungen :
**EP-A- 0 004 559
EP-A-81 901 976
DE-A- 1 931 536
DE-A- 2 738 113
DE-A- 2 829 778
FR-A- 2 229 099
US-A- 4 218 674**

(73) Patentinhaber : **Stockburger, Hermann
Kirnachweg 7
D-7742 St. Georgen (DE)**

**Winderlich, Hans-Georg
Niedere Strasse 36
D-7730 Villingen (DE)**

(72) Erfinder : **Stockburger, Hermann
Kirnachweg 7
D-7742 St. Georgen (DE)**
Erfinder : **Winderlich, Hans-Georg
Niedere Strasse 36
D-7730 Villingen (DE)**

(74) Vertreter : **Prüfer, Lutz H., Dipl.-Phys.
Harthauser Strasse 25d
D-8000 München 90 (DE)**

Jouve, 18, rue St-Denis, 75001 Paris, France

## Beschreibung

Die Erfindung betrifft ein Verfahren zur Kennzeichnung und/oder Identifizierung von Datenträgern, die zur Kennzeichnung und Identifizierung in eine Bearbeitungsstation eingeführt werden, unter Verwendung von die Datenträger kennzeichnenden Daten, die von individuellen physischen Eigenschaften in einem ersten Gebiet, das eine erste Anzahl von seitlich nebeneinanderliegenden ersten Spuren auf dem Datenträger umfaßt, abgeleitet und in Form eines Protokolles auf dem Datenträger gespeichert werden, die beim Identifizieren der Datenträger verglichen werden mit Daten, die von den erfaßten physischen Eigenschaften der zu identifizierenden Datenträger abgeleitet werden.

Ferner betrifft die Erfindung eine Vorrichtung zur Kennzeichnung und Identifizierung eines Datenträgers, auf dem bei der Kennzeichnung von physischen Eigenschaften des Datenträgers abgeleitete Daten in Form eines Protokolles gespeichert werden, mit einer Bearbeitungsstation, in die der Datenträger zur Kennzeichnung und zur Identifizierung eingeführt wird und die eine Erfassungsvorrichtung zur Erfassung der physischen Eigenschaften des Datenträgers aufweist, wobei beim Identifizieren des Datenträgers das Protokoll mit Daten, die von den erfaßten physischen Eigenschaften des zu identifizierenden Datenträgers abgeleitet werden, verglichen wird.

Aus der DE-B 26 35 795 ist ein Verfahren bekannt, bei dem der Datenträger, z. B. eine Scheckkarte, in einer Bearbeitungsstation unter einer Leseeinrichtung hindurchgeführt und so eine zur Bewegungsrichtung des Datenträgers parallele Spur ausgelesen wird. Dabei tritt aber die Schwierigkeit auf, daß der Datenträger bei jeder Bearbeitung bzw. Auswertung sehr genau positioniert werden muß, damit bei der Identifizierung auch genau dieselbe Spur wie bei der Kennzeichnung erfaßt wird, was um so schwieriger ist, als die Spur möglichst schmal sein soll.

In der nicht vorveröffentlichten europäischen Anmeldung 81 901 976 veröffentlicht als Dokument WO 82/00062, am 7.1.82, ist ein Verfahren der vorstehenden Art beschrieben. Bei diesem Verfahren wird zunächst die auszulesende zur Bewegungsrichtung des Datenträgers parallele Spur relativ zu einer Markierung auf dem Datenträger festgelegt. Zum Auslesen wird eine Anzahl X von mehreren nebeneinander angeordneten Leseköpfen verwendet. Auf diese Weise werden mehrere parallele Spuren gleichzeitig ausgelesen. Auch hier ist es erforderlich, daß beim Auslesen der Datenträger bei jeder Bearbeitung bzw. Auswertung sehr genau positioniert werden muß, damit bei der Identifizierung wieder der genaue Abstand zu der Markierung und somit dieselbe Spur bzw. dieselben Spuren wie bei der Kennzeichnung erfaßt werden.

Aufgabe der Erfindung ist es, ein Verfahren der eingangs beschriebenen Art zu schaffen, bei dem die Notwendigkeit einer genauen seitlichen Zuordnung von auszuwertendem Bereich und der diesen Bereich erfassenden Einrichtung entfällt. Ferner soll eine Vorrichtung zur Durchführung dieses Verfahrens angegeben werden.

Diese Aufgabe wird durch ein Verfahren der eingangs beschriebenen Art gelöst, welches gemäß der Erfindung dadurch gekennzeichnet ist, daß bei der Identifizierung eines Datenträgers seine physischen Eigenschaften in einem zweiten Gebiet, das eine zweite Anzahl von seitlich nebeneinanderliegenden zweiten Spuren auf dem Datenträger umfaßt, erfaßt werden, wobei die zweite Anzahl größer als die erste ist und die zweiten Spuren die ersten einschließen, und daß die aus dem zweiten Gebiet bei der Identifizierung abgeleitete Datenmenge mit der Datenmenge, die bei der Kennzeichnung aus dem ersten Gebiet des Datenträgers abgeleitet wird, verglichen und auf das Vorhandensein von Korrelationen zwischen den durch die abgeleiteten Daten dargestellten physischen Eigenschaften untersucht wird.

Die Vorrichtung ist dadurch gekennzeichnet, daß die Erfassungsvorrichtung die physischen Eigenschaften des Datenträgers bei der Kennzeichnung in einem ersten Gebiet, das eine erste Anzahl von seitlich nebeneinanderliegenden ersten Spuren auf dem Datenträger umfaßt und bei der Identifizierung in einem zweiten Gebiet, das eine zweite Anzahl von seitlich nebeneinanderliegenden zweiten Spuren auf dem Datenträger umfaßt, wobei die zweite Anzahl größer als die erste ist und die zweiten Spuren die ersten einschließen, und daß eine Analysevorrichtung vorgesehen ist, welche die aus dem ersten Gebiet und die aus dem zweiten Gebiet abgeleiteten Daten, welche die physischen Eigenschaften des Datenträgers darstellen, miteinander vergleicht und auf das Vorhandensein von Korrelationen zwischen den durch die Daten dargestellten physischen Eigenschaften untersucht.

Weiterbildungen der Erfindung sind in den Unteransprüchen gekennzeichnet.

Im weiteren wird die Erfindung anhand von Ausführungsbeispielen unter Bezugnahme auf die Figuren erläutert. Von den Figuren zeigen:

Figur 1 eine schematische Seitenansicht eines Teiles der Auswerteeinrichtung;

Figur 2 eine diagrammartige Darstellung der Auswerteeinrichtung; und

Figur 3 eine Matrix von Meßpunkten.

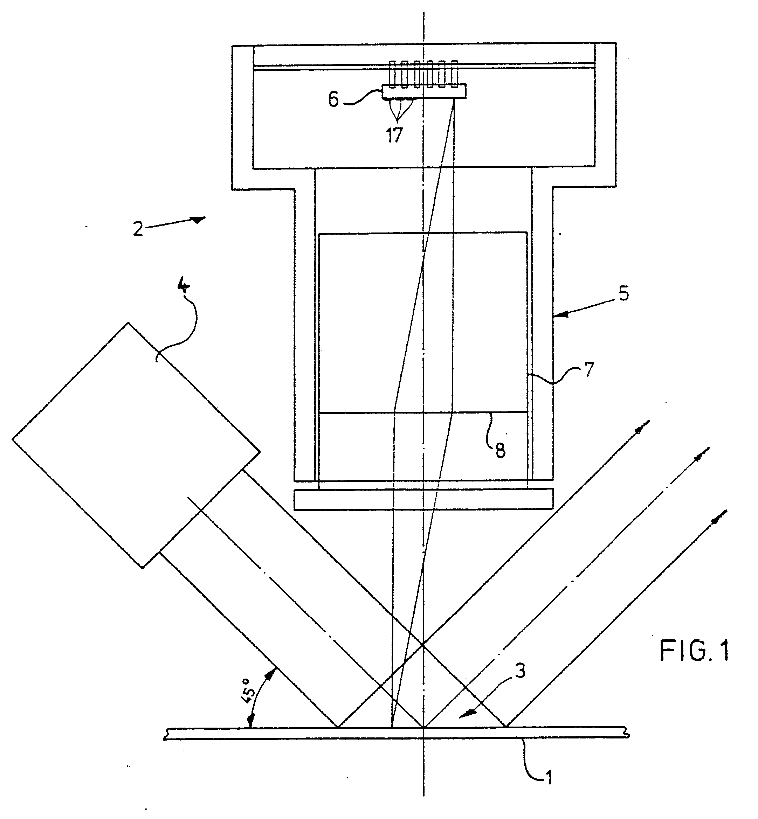

Bei dem Datenträger 1 handelt es sich vorzugsweise um eine Berechtigungskarte, wie sie beispielsweise als Scheckkarte, Wertkarte oder Zugangsberechtigungskarte verwendet wird. Der Datenträger weist eine nichtgezeigte Magnetspur zum Einspeichern von Daten auf. Der Datenträger 1 wird bei der Erfassung seiner physischen Eigenschaften durch eine geeignete Antriebsvorrichtung in ein Terminal 2 so hineinbewegt, daß die Magnetspur unter einem Lese- und Schreibkopf des Terminals zum Auslesen bzw. Einschreiben von Daten hindurch bewegt wird. Bei der Antriebseinrichtung und dem Lese- und Schreibkopf handelt es sich um übliche Ausführungen, so daß diese Teile nicht dargestellt sind. In Fig. 1 ist lediglich ein Ausschnitt aus dem Terminal, und zwar senkrecht zur Bewegungsrichtung des Datenträgers 1, gezeigt. Bei der hier beschriebenen Ausführungsform sind die physischen Eigenschaften des Datenträgers die optischen Eigenschaften seiner Oberfläche, die von ihrer Struktur, Farbe und dgl. abhängen. Ein sich quer zur Bewegungsrichtung des Datenträgers erstreckender Bereich 3 ist mittels einer seitlich angeordneten Lichtquelle 4 ausgeleuchtet. Vorzugsweise ist die Lichtquelle 4 so angeordnet, daß das Licht auf den auszuleuchtenden Bereich unter einem Winkel von annähernd 45° auf die Oberfläche des Datenträgers 1 auftrifft. Senkrecht über dem ausgeleuchteten Bereich 3 ist ein Empfänger 5 vorgesehen, der mit dem Terminal fest verbunden ist. Der Empfänger 5 weist eine CCD-Bildaufnehmerzeile 6 auf, die sich quer zur Bewegungsrichtung des Datenträgers 1 erstreckt. Eine CCD-Bildaufnehmerzeile enthält z. B. 256 einzelne Bildaufnehmerelemente, die hintereinander zeilenförmig angeordnet sind. Jedes einzelne Bildaufnehmerelement hat z. B. eine Breite von 16 bis 18 μm, und der Abstand zwischen je zwei Bildaufnehmerelementen beträgt z. B. 4 μm. Bei einer typischen Datenträgerkarte beträgt z. B. die Korngröße an der Kartenoberfläche etwa 10 μm. Die Auflösung der CCD-Bildwandlerzeile 6 entspricht daher beinahe der Korngröße an der Oberfläche üblicher Datenträger. Der Empfänger 5 umfaßt ferner eine Abbildungsoptik 7, die in der Figur durch eine Hauptebene 8 charakterisiert ist. Die Abbildungsoptik 7 ist so ausgebildet, daß jeder Punkt des ausgeleuchteten Bereiches 3 auf die CCD-Bildaufnehmerzeile 6 abgebildet wird. Die Abbildungsoptik hat einen einstellbaren Abbildungsmaßstab.

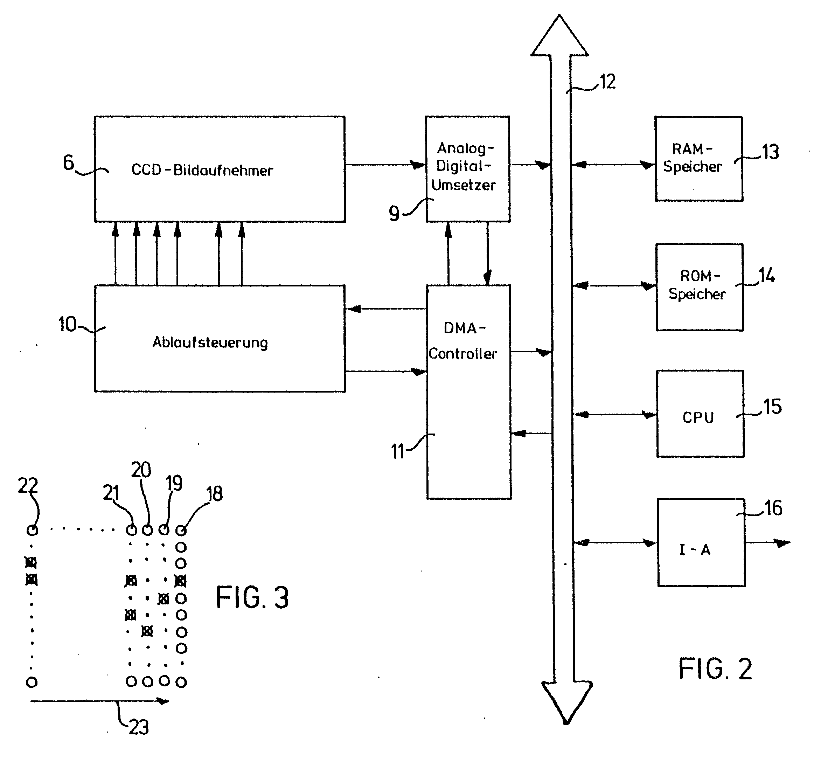

Wie am besten aus Fig. 2 ersichtlich ist, ist der serielle Ausgang der CCD-Bildaufnehmerzeile 6 mit einem schnellen Analog-Digitalumsetzer 9 verbunden. Ferner ist die CCD-Bildaufnehmerzeile 6 mit einer Ablaufsteuerung 10 verbunden. Die Ablaufsteuerung wiederum ist mit einem Steuerbaustein für direkten Speicherzugriff, einem sogenannten DMA-Controler 11 verbunden, der einerseits mit dem Analog-Digitalumsetzer 9 und andererseits über eine Busleitung 12 mit einem RAM-Speicher 13, einem ROM-Speicher 14, einer Zentraleinheit 15 und einer Eingabe-Ausgabeeinheit 16 verbunden ist. Auch der Analog-Digitalumsetzer 9 ist über die Busleitung 12 mit dem RAM-Speicher, dem ROM-Speicher, der Zentraleinheit und der Eingabe-Ausgabeeinheit verbunden.

Die Erfassung der physischen bzw. optischen Eigenschaften des Datenträgers 1 erfolgt nun auf die folgende Weise : Zunächst initialisiert die Zentraleinheit 15 den DMA-Controler 11 durch Angeben einer Basisadresse. Der DMA-Controler 11 erzeugt dann ständig laufende Adressen und vergleicht, ob er die von der Zentraleinheit angegebene Endadresse erreicht hat. Über den DMA-Controler und die Ablaufsteuerung 10 wird die Bildaufnehmerzeile 6 zunächst in den Resetzustand bzw. Grundzustand gebracht. Die von den einzelnen Bildwandlerelementen der Bildaufnehmerzeile 6 erzeugten Analogsignale, die der jeweiligen Reflexionseigenschaft des darauf abgebildeten Punktes des beleuchteten Bereiches 3 proportional sind, werden mit einem durch die Ablaufsteuerung gegebenen Takt zum seriellen Ausgang der Bildwandlerzeile 6 weitergeschoben. Die am seriellen Ausgang der Bildwandlerzeile 6 erscheinenden Analogsignale werden in dem Digital-Analogumwandler 9 in Digitalsignale umgesetzt. Nachdem die Analogsignale aller 256 Bildwandlerelemente in Digitalsignale umgesetzt sind, werden diese Digitalsignale zum RAM-Speicher 13 überführt. Nach vollständiger Abtastung einer Zeile zu 256 Bildpunkten wird unmittelbar anschließend jeweils die nächste Zeile abgetastet, die durch die Relativbewegung zwischen Datenträger 1 und Bildwandlerzeile 6 definiert wird.

In dem RAM-Speicher 13 sind gleichzeitig die aus der Magnetspur ausgelesenen Protokolldaten gespeichert. In dem ROM-Speicher 14 ist ein Programm enthalten, mittels dessen nun die Protokolldaten mit den digitalen Daten verglichen werden, die von den tatsächlich erfaßten optischen Eigenschaften des Datenträgers abgeleitet wurden.

Bei der Kennzeichnung des Datenträgers werden nun nicht alle Ausgangssignale der z. B. 256 Bildwandlerelemente der Bildwandlerzeile 6 zur Erzeugung der kennzeichnenden Daten verwendet, sondern vielmehr wird nur das Signal eines Bildwandlerelementes oder werden die Signale einer ausgewählten Folge von benachbarten oder nichtbenachbarten Bildwandlerelementen zur Ableitung der kennzeichnenden Daten ausgewählt. Diese so erzeugten kennzeichnenden Daten werden in die Protokollspur eingeschrieben.

Sind die ausgewählten Bildwandlerelemente benachbart, so wird auf der Oberfläche des Datenträgers 1 eine streifenförmige Bahn erfaßt und zur Ableitung der kennzeichnenden Daten ausgewertet. Sind die ausgewählten Bildwandlerelemente nicht benachbart, so wird ein beliebiges Flächenmuster auf der Oberfläche des Datenträgers 1 erfaßt und zur Ableitung der kennzeichnenden Daten ausgewertet, wobei die Breite des Flächenmusters durch die Länge der Bildwandlerzeile 6 begrenzt ist. Wenn das Flächenmuster nicht aus einzelnen parallelen Streifen bestehen soll, die sich in der Vorschubrichtung des Datenträgers 1 erstrecken, wird die Ablaufsteuerung so programmiert, daß z. B. bei jeweils aufeinanderfolgenden Zeilen 18, 19, 20, 21 und 22 jeweils verschiedene Bildwandlerelemente der Bildaufnehmerzeile 6 ausgewertet werden. Bei dem in Fig. 3 gezeigten Ausführungsbeispiel sind die ausgewählten Bildwandlerelemente : In Zeile 18 das 4. Element, in Zeile 19 das 5. Element, in Zeile 20 das 7. Element, in Zeile 21 das 4. Element und das 6. Element und in Zeile 22 das 3. Element und das 4. Element. In die Magnetspur des Datenträgers 1 werden als Protokoll die Daten dieser ausgewählten Bildwandlerelemente eingeschrieben.

Auf diese Weise entsteht ein Protokoll als Ergebnis der Erfassung der den Datenträger kennzeichnenden zufälligen optischen Eigenschaften, die jeweils an kleinen Flächenbereichen desselben ermittelt werden, die nicht auf einer zur Bewegungsrichtung des Datenträgers parallelen Geraden liegen. In Fig. 3 ist die Bewegungsrichtung des Datenträgers durch einen Pfeil 23 angedeutet.

Beim Identifizieren des Datenträgers, d. h. beim Prüfen des Datenträgers auf seine Echtheit, werden in jeder Zeile 18, ..., 22 die Ausgangssignale sämtlicher z. B. 256 Bildwandlerelemente der Bildaufnehmerzeile 6 in dem RAM-Speicher 13 abgespeichert. Mittels eines geeigneten Prüfprogrammes wird dann untersucht, ob in der durch die Vielzahl von Meßzeilen 18, ..., 22 gebildeten Matrix eine Datenmenge vorhanden ist, die mit der sich aus dem Protokoll ergebenden Datenmenge übereinstimmt. Wie leicht ersichtlich ist, kommt es dabei nicht darauf an, daß der Datenträger wieder in der gleichen seitlichen Anordnung ausgerichtet ist. Vielmehr ist eine seitliche Verschiebung ohne Bedeutung, da es nur auf die Folge der Meßpunkte, nicht aber ihre seitliche Ausrichtung zu der Matrix bzw. zur Reihe ankommt. Eine Relativverschiebung der gesamten Meßpunktfolge ist ohne Bedeutung.

Geeignete Prüfprogramme sind dem Fachmann bekannt. Sie beruhen auf der Anwendung von Korrelations- und Signaturanalyseverfahren, die geeignet sind, in zwei miteinander zu vergleichenden Datenmengen übereinstimmende Merkmale zu erkennen. Auf Übereinstimmung wird erkannt, wenn bei einer vorbestimmten Anzahl von Vergleichen einzelner Daten aus den beiden Datenmengen miteinander Übereinstimmung festgestellt wird. Bei diesem Analyseverfahren werden die beiden gespeicherten Datenmengen, die den beiden, unterschiedlich großen, erfaßten Gebieten des Datenträgers entsprechen, gewissermaßen gegeneinander verschoben und übereinander zur Deckung gebracht, um übereinstimmende Datenmuster zu erkennen. Bezüglich weiterer Einzelheiten zu derartigen Verfahren wird auf Wolfgang Wehrmann u. a. « Korrelationstechnik », 2. Auflage, Expert-Verlag, verwiesen.

Gemäß einer weiteren Ausführungsform ist der Abtaster nicht als Bildaufnehmerzeile 6, sondern als flächenförmige Matrix von Fotoempfängern ausgebildet, die der in Fig. 3 gezeigten Matrix mit Reihen und Spalten von Fotoempfängern entspricht. Gleichzeitig wird bei dieser Ausführungsform nicht ein linearer Bereich 3 sondern ein flächenhafter Bereich ausgeleuchtet. Die Messung erfolgt wie in dem oben beschriebenen Ausführungsbeispiel, wobei allerdings der Datenträger 1 nicht mehr relativ zum Bildaufnehmer bewegt wird. Vielmehr wird die Folge der Reihen 18, 19, ..., 22 durch die Vielzahl der aufeinanderfolgenden Reihen des matrixförmigen Bildaufnehmers mit einer einzigen Messung erfaßt. Die Auswertung erfolgt wie bei dem oben beschriebenen Ausführungsbeispiel. Beim Kennzeichnen des Datenträgers wird eine vorgegebene Anzahl mit einer vorgegebenen Verteilung von Bildpunkten der Matrix ausgewertet und als Protokoll eingeschrieben. Bei der Echtheitsprüfung wird ein Vergleich dahingehend durchgeführt, ob die Matrix eine Folge von Bildpunkten enthält, deren Ausgangssignal mit den sich aus dem Protokoll ergebenden Daten übereinstimmt. In diesem Fall wird die Echtheit bejaht. Eine seitliche Relativverschiebung der Karte spielt keine Rolle, da es nur auf die Verteilung der Punkte zueinander ankommt.

Mit der oben beschriebenen Erfindung wird nicht nur der Vorteil erreicht, daß auf eine genaue seitliche Ausrichtung des Datenträgers relativ zur Auswertungseinrichtung verzichtet werden kann. Vielmehr wird eine zusätzliche Sicherheit dadurch erzielt, daß eine Punktfolge ausgewertet wird, die nicht mehr auf einer Geraden liegt, wodurch eine Auswertung durch Nichtberechtigte unmöglich gemacht wird.

Die Anwendung der Korrelationstechnik zur Echtheitsprüfung eines Datenträgers macht es möglich, einen Datenträger auch dann als echt zu erkennen, wenn er normale gebrauchs- und benutzungsbedingte Veränderungen aufweist. Als Echtheitskriterium wird ein vorbestimmter Korrelationskoeffizient definiert, der einer nur unvollständigen Übereinstimmung zwischen den bei der Identifizierung miteinander zu vergleichenden Daten entspricht. Dieser Korrelationskoeffizient ist so gewählt, daß normale gebrauchs- und abnutzungsbedingte Veränderungen der physischen Eigenschaften des Datenträgers, z. B. Riefen, Kratzer, Verschmutzung, Knicklinien oder dgl., eine Erkennung des Datenträgers als echt nicht verhindern.

Das Echtheitsprotokoll kann auf dem Datenträger selbst aufgezeichnet sein, insbesondere auf einer Magnetspur desselben, wie vorstehend als Ausführungsbeispiel beschrieben wurde. Der Datenträger kann auch einen in ihn integrierten Halbleiterspeicher aufweisen, in dem das Protokoll aufgezeichnet wird. Ferner kann das Protokoll bzw. Echtheitsprotokoll an zentraler Stelle, z. B. in der Bearbeitungsstation oder in einer zentralen Datenverarbeitungsanlage gespeichert werden.

Um das Echtheitsprotokoll dem jeweiligen Abnutzungsgrad des Datenträgers anzupassen, d. h. zu aktuali-sieren, wird vorzugsweise nach jedem Identifizierungsvorgang das Echtheitsprotokoll neu erstellt und neu abgespeichert.

## Ansprüche

1. Verfahren zur Kennzeichnung und/oder Identifizierung von Datenträgern, die zur Kennzeichnung und Identifizierung in eine Bearbeitungsstation eingeführt werden, unter Verwendung von die Datenträger kennzeichnenden Daten, die von individuellen physischen Eigenschaften in einem ersten Gebiet, das eine erste Anzahl von seitlich nebeneinanderliegenden ersten Spuren auf dem Datenträger umfaßt, abgeleitet und in Form eines Protokolles auf dem Datenträger gespeichert werden, die beim Identifizieren der Datenträger verglichen werden mit Daten, die von den erfaßten physischen Eigenschaften der zu identifizierenden Datenträger abgeleitet werden, dadurch gekennzeichnet, daß bei der Identifizierung eines Datenträgers seine physischen Eigenschaften in einem zweiten Gebiet, das eine zweite Anzahl von seitlich nebeneinanderliegenden zweiten Spuren auf dem Datenträger umfaßt, erfaßt werden, wobei die zweite Anzahl größer als die erste ist und die zweiten Spuren die ersten einschließen, und daß die aus dem zweiten Gebiet bei der Identifizierung abgeleitete Datenmenge mit der Datenmenge, die bei der Kennzeichnung aus dem ersten Gebiet des Datenträgers abgeleitet wird, verglichen und auf das Vorhandensein von Korrelationen zwischen den durch die abgeleiteten Daten dargestellten physischen Eigenschaften untersucht wird.

2. Verfahren nach Anspruch 1, dadurch gekennzeichnet, daß die zu erfassenden Gebiete des Datenträgers durch eine Vorschubrichtung desselben in der Bearbeitungsstation und eine dazu transversale Erstreckungsrichtung eines linearen Abtasters, der die physischen Eigenschaften des Datenträgers erfaßt, definiert ist.

3. Verfahren nach Anspruch 2, dadurch gekennzeichnet, daß als linearer Abtaster eine CCD-Bildaufnehmerzeile verwendet wird.

4. Verfahren nach einem der Ansprüche 1 bis 3, dadurch gekennzeichnet, daß die physischen Eigenschaften des Datenträgers bei der Kennzeichnung innerhalb eines vorgegebenen Flächenmusters im ersten Gebiet erfaßt werden.

5. Verfahren nach einem der Ansprüche 1 bis 3, dadurch gekennzeichnet, daß die physischen Eigenschaften des Datenträgers bei der Kennzeichnung innerhalb eines zufälligen Flächenmusters im ersten Gebiet erfaßt werden.

6. Vorrichtung zur Kennzeichnung und Identifizierung eines Datenträgers, auf dem bei der Kennzeichnung von physischen Eigenschaften des Datenträgers abgeleitete Daten in Form eines Protokolles gespeichert werden, mit einer Bearbeitungsstation, in die der Datenträger zur Kennzeichnung und zur Identifizierung eingeführt wird und die eine Erfassungsvorrichtung zur Erfassung der physischen Eigenschaften des Datenträgers aufweist, wobei beim Identifizieren des Datenträgers das Protokoll mit Daten, die von den erfaßten physischen Eigenschaften des zu identifizierenden Datenträgers abgeleitet werden, verglichen wird, dadurch gekennzeichnet, daß die Erfassungvorrichtung die physischen Eigenschaften des Datenträgers bei der Kennzeichnung in einem ersten Gebiet, das eine erste Anzahl von seitlich nebeneinanderliegenden ersten Spuren auf dem Datenträger umfaßt und bei der Identifizierung in einem zweiten Gebiet, das eine zweite Anzahl von seitlich nebeneinanderliegenden zweiten Spuren auf dem Datenträger umfaßt, wobei die zweite Anzahl größer als die erste ist und die zweiten Spuren die ersten einschließen, und daß eine Analysevorrichtung vorgesehen ist, welche die aus dem ersten Gebiet und die aus dem zweiten Gebiet abgeleiteten Daten, welche die physischen Eigenschaften des Datenträgers darstellen, miteinander vergleicht und auf das Vorhandensein von Korrelationen zwischen den durch die Daten dargestellten physischen Eigenschaften untersucht.

7. Vorrichtung nach Anspruch 6, dadurch gekennzeichnet, daß die Erfassungsvorrichtung eine CCD-Bildaufnehmerzeile umfaßt und daß eine Antriebsvorrichtung vorgesehen ist, die den Datenträger und die CCD-Bildaufnehmerzeile relativ zueinander bewegt, wobei die CCD-Bildaufnehmerzeile transversal zur Bewegungsrichtung angeordnet ist.

8. Vorrichtung nach Anspruch 6 oder 7, dadurch gekennzeichnet, daß als Echtheitskriterium eines Datenträgers ein vorbestimmter Korrelationskoeffizient definiert ist, der einer nicht vollständigen Übereinstimmung zwischen bei der Identifizierung miteinander zu vergleichenden Daten entspricht.

9. Vorrichtung nach Anspruch 8, dadurch gekennzeichnet, daß der Korrelationskoeffizient so gewählt ist, daß normale gebrauchsbedingte und abnutzungsbedingte Veränderungen der physischen Eigenschaften des Datenträgers eine Erkennung des Datenträgers als echt nicht verhindern.

10. Vorrichtung nach einem der Ansprüche 6 bis 9, dadurch gekennzeichnet, daß der Datenträger einen in ihn integrierten Halbleiterspeicher aufweist.

**Claims**

1. Method for marking and/or identifying data carriers, which are introduced into a processing station for marking and identifying, by using of data characterizing the data carriers, the data being derived from individual physical properties in a first region comprising a first number of laterally adjacent first tracks on the data carrier and being stored on the data carrier in the form of a protocol and which are compared with data derived from the detected physical properties of the data carriers to be identified for identification, characterized in that in identifying a data carrier the physical properties thereof are detected in a second region comprising a second number of laterally adjacent second tracks on the data carrier, the second number being greater than the first number and the second tracks including the first tracks, and that the set of data derived from the second region in the identification process is compared with the set of data derived from the first region of the data carrier in the marking process and is analysed with respect to the presence of correlations between the physical properties represented by the derived data.

2. Method according to claim 1, characterized in that the regions of the data carrier to be detected are defined by a feed direction thereof in the processing station and a dimension of a linear detector detecting the physical properties of the data carrier transversely thereto.

3. Method of claim 2, characterized in that a CCD image recording row is used as linear detector.

4. Method according to any of the claims 1 to 3, characterized in that in the marking process the physical properties of the data carrier are detected within a predetermined surface pattern within the first region.

5. Method according to any of the claims 1 to 3, characterized in that in the marking process the physical properties of the data carrier are detected within a random surface pattern in the first region.

6. Apparatus for marking and identifying a data carrier on which data derived from physical properties of the data carrier are stored in the form of a protocol in the marking process, comprising a processing station into which the data carrier is introduced for marking and identifying and which comprises a detection means for detecting the physical properties of the data carrier, wherein in identifying the data carrier the protocol is compared with data which are derived from the detected physical properties of the data carrier to be identified, characterized in that in the marking process the detection means detects the physical properties of the data carrier in a first region comprising a first number of laterally adjacent first tracks on the data carrier and in the identifying process the detection means detects the physical properties of the data carrier in a second region comprising a second number of laterally adjacent second tracks on the data carrier, the second number being greater than the first number and the second tracks including the first tracks, and that analyser means are provided comparing the data derived from the first region with the data derived from the second region, the data representing the physical properties of the data carrier, and analysing the data for the presence of correlations between the physical properties represented by the data.

7. Apparatus according to claim 6, characterized in that the detection means comprises a CCD image recording row and that driving means are provided moving the data carrier and the CCD image recording row relatively to each other, the CCD image recording row being disposed transversely to the direction of movement.

8. Apparatus according to claim 6 or 7, characterized in that a predetermined correlation coefficient is defined as authenticity criterium, the predetermined correlation coefficient corresponding to an incomplete conformity of the data to be compared with each other for identification.

9. Apparatus according to claim 8, characterized in that the correlation coefficient is selected such that alterations of the physical properties of the data carrier which are caused by usual utilisation and wear, do not prevent the detection as an authentic data carrier.

10. Apparatus according to any of the claims 6 to 9, characterized in that the data carrier comprises a semiconductor memory integral therewith.

**Revendications**

1. Procédé pour marquer et/ou identifier des supports de données que l'on introduit pour le marquage et l'identification dans un poste de traitement, avec utilisation de données marquant le support de données qui sont tirées de propriétés physiques individuelles dans une première zone qui comprend un premier nombre de premières pistes placées latéralement côte à côte sur le support de données et sont mémorisées sur le support de données sous la forme d'un protocole et qui, lors de l'identification des supports de données, sont comparées à des données qui sont tirées des propriétés physiques détectées des supports de données à identifier, caractérisé par le fait que lors de l'identification d'un support de données, on détecte ses propriétés physiques dans une deuxième zone qui comprend un deuxième nombre de deuxièmes pistes placées latéralement côte à côte sur le support de données, le deuxième nombre étant plus grand que le premier et les deuxièmes pistes entourant les premières, et que l'on compare la quantité de données tirées de la deuxième zone lors de l'identification à la quantité de données tirée de la première zone du support de données lors du marquage, et qu'on les examine quant à l'existence de corrélation entre les propriétés physiques représentées par les données tirées.

2. Procédé selon la revendication 1, caractérisé par le fait que les zones à détecter du support de données sont définies par une direction d'avancement de celui-ci dans le poste de traitement et une direction d'extension, transversales à celle-ci, d'un explorateur linéaire qui détecte les propriétés physiques du support de données.

3. Procédé selon la revendication 2, caractérisé par le fait que comme explorateur linéaire, on utilise une ligne de capteur d'image CCD.

4. Procédé selon l'une des revendications 1 à 3, caractérisé par le fait que, lors du marquage, on détecte les propriétés physiques du support de données à l'intérieur d'une mosaïque prescrite, dans la première zone.

5. Procédé selon l'une des revendications 1 à 3, caractérisé par le fait que, lors du marquage, on détecte les propriétés physiques du support de données à l'intérieur d'une mosaïque aléatoire, dans la première zone.

6. Appareil pour le marquage et l'identification d'un support de données sur lequel, lors du marquage, on mémorise sous la forme d'un protocole des données tirées de propriétés physiques du support de données, comportant un poste de traitement dans lequel on introduit le support de données pour le marquage et pour l'identification et qui présente un dispositif de détection pour la détection des propriétés physiques du support de données, le protocole étant comparé, lors de l'identification du support de données, à des données que l'on tire des propriétés physiques détectées du support de données à identifier, caractérisé par le fait que le dispositif de détection détecte les propriétés physiques du support de données, lors du marquage, dans une première zone qui comprend un premier nombre de pistes placées latéralement côte à côte sur le support de données et lors de l'identification, dans une deuxième zone qui comprend un deuxième nombre de deuxièmes pistes placées latéralement côte à côte sur le support de données, le deuxième nombre étant plus grand que le premier et les deuxièmes pistes entourant les premières, et qu'il est prévu un dispositif d'analyse qui compare entre elles les données tirées de la première zone et celles qui sont tirées de la deuxième zone, qui représentent les propriétés physiques du support de données et les examine quant à l'existence de corrélations entre les propriétés physiques représentées par les données.

7. Appareil selon la revendication 6, caractérisé par le fait que le dispositif de détection comprend une ligne de capteur d'image CCD et qu'il est prévu un dispositif d'entraînement qui déplace relativement le support de données et la ligne de capteur CCD, la ligne de capteur CCD étant disposée transversalement à la direction de mouvement.

8. Appareil selon l'une des revendications 6 et 7, caractérisé par le fait que comme critère d'authenticité d'un support de données est défini un coefficient de corrélation prédéterminé qui correspond à une concordance non complète entre les données à comparer entre elles lors de l'identification.

9. Appareil selon la revendication 8, caractérisé par le fait que le coefficient de corrélation est choisi de telle sorte que des modifications normales des propriétés physiques du support de données, causées par l'utilisation et causées par l'usure, n'empêchent pas la reconnaissance du support de données comme authentique.

10. Appareil selon l'une des revendications 6 à 9, caractérisé par le fait que le support de données présente une mémoire à semi-conducteur qui lui est intégrée.

FIG. 1

FIG. 3

FIG. 2